# EUROPÄISCHE PATENTSCHRIFT

(11) **EP 3 478 389 B1**
(45) Veröffentlichungstag und Bekanntmachung des Hinweises auf die Patenterteilung: **09.11.2022**
(21) Anmeldenummer: 17743264.8
(22) Anmeldetag: 03.07.2017
(51) Int. Cl.: B01D 29/68

(54) **RÜCKSPÜLFILTER**
BACKWASH FILTER
FILTRE DE RETROLAVAGE

(30) Priorität: 01.07.2016 EP 16177668
(43) Veröffentlichungstag der Anmeldung: 08.05.2019
(73) Patentinhaber: BWT Aktiengesellschaft, 5310 Mondsee (AT)
(72) Erfinder: JOHANN, Jürgen, 69226 Nussloch (DE); MAIRHOFER, Anton, 4893 Zell am Moos (AT)
(74) Vertreter: Friderichs, Gunther
(86) Internationale Anmeldenummer: PCT/EP2017/066532
(87) Internationale Veröffentlichungsnummer: WO 2018/002384

(56) Entgegenhaltungen:
- EP-A1- 2 767 317
- DE-A1- 4 343 180
- DE-U1- 8 438 010

## Beschreibung

### Technisches Gebiet

Die Erfindung betrifft einen Rückspülfilter mit einem Einlass, Auslass und Ablauf, mit einem Filter, mit einem Gehäuse, das vom Filter in eine mit dem Einlass verbundene Einlasskammer und in eine mit dem Auslass verbundene Auslasskammer unterteilt ist, und mit einer Rückspüleinrichtung, die ein im Gehäuse um den Filter einlassseitig drehbar angeordnetes Absaugelement mit mindestens einer Ansaugöffnung, die in Ansaugrichtung auf den Filter zur Filterreinigung gerichtet ist, eine mit der Ansaugöffnung und dem Auslass verbundenen Rückspülkanal und eine Dreheinrichtung aufweist, die bei einer Druckabsenkung im Rückspülkanal die Drehbewegung des Absaugelements um den Filter treibt.

### Stand der Technik

Um die Reinigung einer Filterkerze eines Rückspülfilters beim Rückspülen des Rückspülfilters zu erleichtern, ist es aus dem Stand der Technik bekannt (DE4343180A1 ), beim Rückspülen eine Druckabsenkung im Rückspülkanal zu nutzen, um ein Absaugelement mit einer Ansaugöffnung um die Filterkerze zu drehen und damit Schmutzpartikel von der Filteroberfläche abzusaugen. Konstruktiv gelöst wird dies mit einer Dreheinrichtung, die - ähnlich zu einem Spindelhubgetriebe - das Absaugelement mit einem im Rückspülkanal vorgesehenen Kolben und einer mit dem Kolben mechanisch gekoppelten Antriebsspindel drehend antreibt. Nachteilig ist dabei, dass die Drehbewegung durch den maximalen Hub des Kolbens des Absaugelements begrenzt ist - was die Reinigungswirkung des Absaugelements, ins- besondere gegenüber vergleichsweise fest an der Filterkerze haftenden Schmutzpartikeln, eingeschränkt. Daher kann trotz Rückspülfunktion am Rückspülfilter eine standfeste Reinigung der Filterkerze nicht sichergestellt werden - was nachteilig eines erhöhten Wartungsaufwands am Rückspülfilter in Bezug auf dessen Filterkerze bedarf.

Ein Rückspülfilter ist in dem Dokument DE 84 38 010 U1 gezeigt.

### Darstellung der Erfindung

Es ist daher die Aufgabe der Erfindung, einen Rückspülfilter der eingangs geschilderten Art derart konstruktiv zu verändern, dass beim Rückspülen stets für eine ausreichende Reinigung des Filters von Schmutzpartikel gesorgt werden kann. Zudem soll der Rückspülfilter handhabungs- und wartungsfreundlich sein.

Die Aufgabe der Erfindung wird durch einen Rückspülfilter gemäß Anspruch 1 gelöst.

Bevorzugte Ausführungsformen und Weiterbildungen der Erfindung sind dem Gegenstand der abhängigen Ansprüche zu entnehmen.

Die Erfindung löst die gestellte Aufgabe dadurch, dass die Dreheinrichtung bei der Druckabsenkung im Rückspülkanal durch die gegen die Radiale des Absaugelements geneigte Ansaugrichtung der Ansaugöffnung die Drehbewegung des Absaugelements treibt.

Treibt die Dreheinrichtung bei Druckabsenkung im Rückspülkanal durch die gegen die Radiale des Absaugelements geneigte Ansaugrichtung der Ansaugöffnung die Drehbewegung des Absaugelements, kann im Gegensatz zum Stand der Technik über die gesamte Dauer der Druckabsenkung bzw. der Rückspülung die Filterabsaugung des Absaugelements aufrecht erhalten werden. Der Unterdruck im Rückspülkanal erzeugt nämlich durch die erfindungsgemäß gerichtete Ansaugrichtung am Absaugelement eine Reaktionskraft, welche auf die Drehstellung des Absaugelements wirkt - und so für eine Drehung des Ansaugelements um den Filter sorgt. Damit kann eine gegenüber dem Stand der Technik verbesserte Reinigung des Filters von Schmutzpartikeln gewährleistet werden. Diese Filterreinigung kann auch entsprechend dem Verschmutzungsgrad vergleichsweise einfach über die Dauer der Rückspülung eingestellt werden, wodurch die Rückspülung und damit auch die Handhabung des Rückspülfilters vergleichsweise einfach gestaltet sein kann. Besonders kann sich aber die Erfindung dadurch gegenüber dem Stand der Technik auszeichnen, dass aufgrund der kontinuierlichen Absaugung des Absaugelements während der gesamten Rückspüldauer, auch hartnäckig anhaftende Schmutzpartikel vom Filter absaugbar sind, wodurch die Filterfunktion am Rückspülfilter gewährleistet bleiben kann. Dies vermindert nicht nur den Wartungsaufwand am Rückspülfilter sondern erhöht im Speziellen auch die Standfestigkeit des erfindungsgemäßen Rückspülfilters.

Gemäß der Erfindung ist das Absaugelement im Rückspülfilter axial entlang der Lagerachse, um die auch das Absaugelement drehbar gelagert ist, von einer Filterbetriebslage in eine Rückspüllage verschiebbar gelagert.

Ist die Ansaugöffnung schlitzförmig ausgebildet, kann die Filterabsaugung ein größeres Längssegment des Filtermantels erfassen, dennoch aber an der Filteroberfläche für eine ausreichende Strömungsgeschwindigkeit sorgen, um ein besonders gutes und sicheres Ergebnis der Absaugung zu erreichen.

Verläuft die Schlitzlängsachse der Ansaugöffnung zur Längsachse des Absaugelements geneigt, kann das Ergebnis der Absaugung am Filter weiter verbessert werden. Auf diese Weise ist es nämlich möglich, durch die schräg verlaufende Ansaugöffnung jene Schmutzpartikel, die zwar von einem ersten Abschnitt der Ansaugöffnung losgelöst, aber nicht abgesaugt wurden, vom einem diesem ersten Abschnitt nachfolgenden zweiten Abschnitt der Ansaugöffnung abzusaugen. Ein erneutes Festsetzen der Schmutzpartikel am Filtermantel bis zu jenem Zeitpunkt, an dem die nächste Absaugung dieses Filtermantelbereichs stattfindet, kann so verhindert werden. Erfindungsgemäß kann der Filter damit selbst von hartnäckig anhaftenden Schmutzpartikeln gereinigt werden, was einen besonders standfesten Rückspülfilter schafft.

Alternativ zu einem Schlitz als Ansaugöffnung, kann auch vorgesehen sein, dass das Absaugelement mindestens eine längs diesem verlaufende Reihe an nacheinander und voneinander beabstandet angeordneten Ansaugöffnungen aufweist, um mit erhöhter Strömungsgeschwindigkeit Schmutzpartikel vom Filter absaugen zu können. Diese Absaugung kann sich weiter verbessern, wenn das Absaugelement zwei diametral gegenüberliegende Reihen aufweist, deren Ansaugöffnungen auf Lücke zueinander angeordnet sind.

Sind das Absaugelement und der Filter koaxial zueinander angeordnet, kann - aufgrund vergleichsweise kurzer Rückspülkanallängen - eine vergleichsweise hohe Saugleistung am Absaugelement erreicht und somit das Ergebnis der Absaugung weiter verbessert werden.

Die Konstruktion des Absaugelements kann vereinfacht werden, wenn der Rückspülkanal einen im Absaugelement mittleren Zentralkanal und mindestens einen mit dem mittleren Zentralkanal verbundenen Seitenkanal aufweist, welcher gegen die Radiale des Absaugelements geneigt verläuft und in der Ansaugöffnung endet. Des Weiteren ist durch den mittleren Zentralkanal am Absaugelement vermeidbar, dass die Längsströmung durch das Absaugelement der Reaktionskraft zur Drehung des Absaugelements entgegenwirkt - was selbst bei vergleichsweise geringen Druckunterschieden bei der Rückspülung eine zuverlässige Drehung des Absaugelements gewährleisten kann.

Eine turbulente Ansaugströmung im Seitenkanal des Absaugelements kann vermieden bzw. verringert werden, wenn der Seitenkanal einander gegenüberliegende gekrümmte Leitflächen aufweist, welche an der Ansaugöffnung enden. In Folge dessen kann unter anderem die von der Ansaugströmung auf das Absaugelement wirkende Reaktionskraft erhöht werden, was die treibende Wirkung der Dreheinrichtung weiter verbessert.

Indem sich der Zentralkanal längs in seiner Querschnittsfläche erweitert, kann sich die Möglichkeit eröffnen, die Ansaugleistung über die gesamte Länge der Ansaugöffnung einzustellen, um ein sicheres Absaugergebnis am Filter zu erreichen. Insbesondere ist damit unter anderem eine gleichmäßige Ansaugleistung über die gesamte Länge der Ansaugöffnung einstellbar. Weist das Absaugelement mindestens eine Schaufel auf, kann es in der Art eines Schaufellaufrads ausgebildet und damit unterstützend auf die Drehung des Absaugelements einwirken. Damit ist es möglich - durch Erhöhung der treibenden Kraft - die Dreheinrichtung weiter zu verbessern und so selbst bei geringen Druckunterschieden im Rückspülkanal zuverlässig eine Reinigung des Filters zu gewährleisten.

Ein erhöhter kombinatorischer Effekt zum Treiben des Absaugelements durch die gerichtete Saugströmung des Absaugelements und durch die Laufradeigenschaften des Absaugelements kann entstehen, wenn die Schaufel an ihrer Schaufelkante die Ansaugöffnung aufweist. Die gerichtete Saugströmung an den Schaufelkanten kann nämlich dort die Drehbewegung bremsende Verwirbelungen vermeiden, welche bei gleichbleibendem Wasserdruck zwischen Einlass und Auslass bei der Umsetzung der kinetischen Energie am Absaugelement entstehen können. Auf Basis des damit verringerten Drehwiderstands am Absaugelement kann die Funktion der Absaugung erheblich zuverlässiger ausgebildet werden - was eine besonders standfeste Reinigung des erfindungsgemäßen Filters gewährleistet.

Die genannte Unterstützung der Drehbewegung aufgrund der Außengeometrie des Absaugelements kann weiter verbessert werden, wenn die Schaufel vorwärts gekrümmt ist.

Variiert die Schaufelkontur der Schaufeln in Längsrichtung des Absaugelements, kann die Laufeigenschaften des Absaugelements weiter verbessert werden.

Die Konstruktion des Rückspülfilters kann zusätzlich vereinfacht werden, wenn das Absaugelement im Rückspülfilter frei drehbar angeordnet ist.

Erfindungsgemäß können Verunreinigungen nicht nur über jene auf den Filter gerichtete Ansaugöffnung bzw. Ansaugöffnungen in den Rückspülkanal gelangen, sondern es kann auch auf den Boden der Einlasskammer eine vergleichsweise hohe Absaugwirkung entfaltet werden. Dies, indem das Absaugelement im Rückspülfilter axial von einer Filterbetriebslage in eine Rückspüllage verschiebbar gelagert ist und indem der Rückspülfilter eine mit dem Rückspülkanal verbundene Auslassöffnung aufweist, die einerseits in der Filterbetriebslage des Absaugelements offen und andererseits in der axial zur Filterbetriebslage verschobenen Rückspüllage des Absaugelements verschlossen ist. Eine schnelle und standfeste Reinigung des Filters kann damit gewährleistet werden. Zudem kann diese axiale Verschiebung genützt werden, die Auslassöffnung zu öffnen und zu verschließen. Derart sind die Konstruktion vereinfach- und die Standfestigkeit des Rückspülfilters erhöhbar.

Dieses Öffnen und Verschließen der ersten Auslassöffnung mit Hilfe der axialen Verschiebung des Absaugelements kann ermöglicht werden, wenn das erste Absaugelement zusätzlich zur Ansaugöffnung die mit dem Rückspülkanal verbundene erste Auslassöffnung aufweist, welche relativ zum Boden der Einlasskammer derart angeordnet ist, dass einerseits in der Filterbetriebslage die erste Auslassöffnung zumindest bereichsweise oberhalb des Bodens der Einlasskammer liegt und damit gegenüber der Einlasskammer offen ist und andererseits in der axial zur Filterbetriebslage verschobenen Rückspüllage die erste Auslassöffnung unterhalb des Bodens der Einlasskammer liegt und damit gegenüber der Einlasskammer verschlossen ist.

Alternativ zu einer ersten Auslassöffnung am Absaugelement kann dieses Öffnen und Verschließen der Auslassöffnung mit Hilfe der axialen Verschiebung des Absaugelements ermöglicht werden, wenn sich die zweite Auslassöffnung zwischen dem zweiten Absaugelement und einem Boden der Einlasskammer ausbildet, wobei in der axial zur Filterbetriebslage verschobenen Rückspüllage das zweite Absaugelement am Boden anliegt und damit die zweite Auslassöffnung verschließt.

Ist das Absaugelement im Rückspülfilter entgegen einer Rückstellfeder axial verschiebbar gelagert, kann auf standfeste Weise eine Rückstellung des Absaugelements von dessen Rückspüllage in dessen Filterlage gewährleistet werden. Kurze Beschreibung der Zeichnungen

In den Figuren ist beispielsweise der Erfindungsgegenstand anhand mehrerer Ausführungsvarianten näher dargestellt. Es zeigen
Fig. 1 eine geschnittene Seitenansicht auf einen ersten Rückspülfilter im Filterbetrieb
Fig. 2 eine geschnittene Seitenansicht des nach Fig. 1 dargestellten Rückspülfilters bei der Rückspülung,
Fig. 3 eine Schnittansicht nach III-III der Fig. 1 und Fig. 4,
Fig. 4 eine Seitenansicht auf ein erstes Absaugelement des ersten Rückspülfilters,
Fig. 5 eine geschnittene Seitenansicht auf einen zweiten Rückspülfilter im Filterbetrieb,
Fig. 6 eine geschnittene Seitenansicht des nach Fig. 5 dargestellten Rückspülfilters bei der Rückspülung und
Fig. 7 und 8 eine Seitenansicht auf ein zweites Absaugelement des zweiten Rückspülfilters.

### Wege zur Ausführung der Erfindung

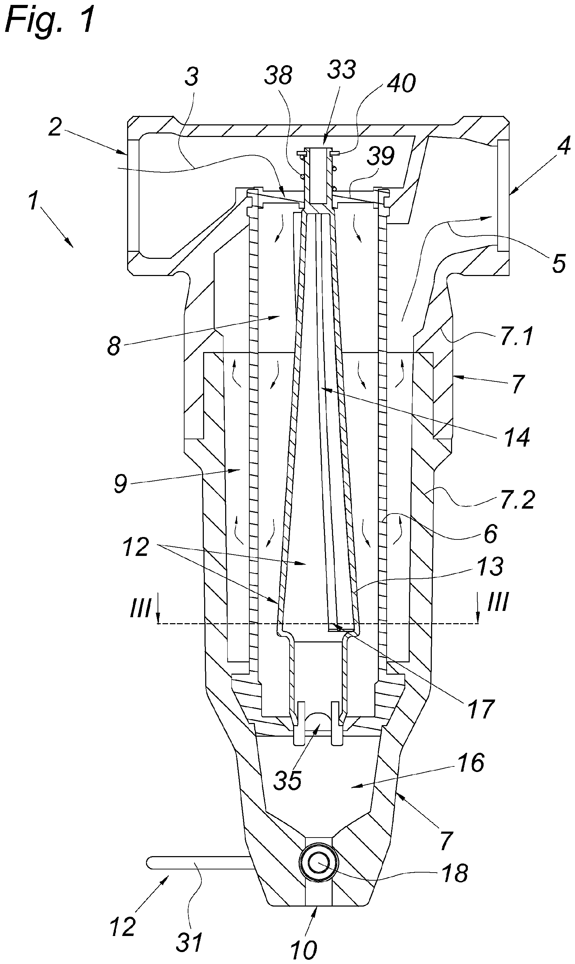

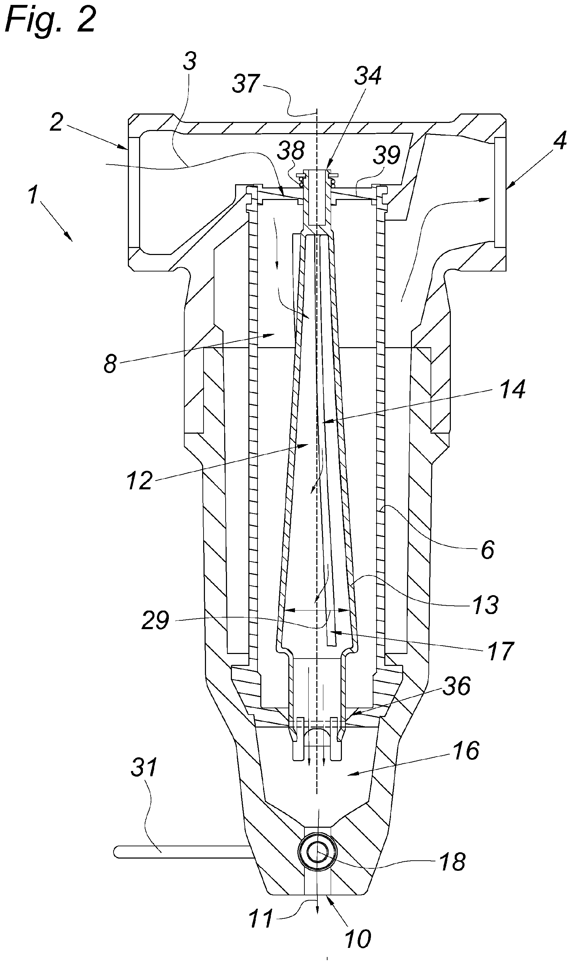

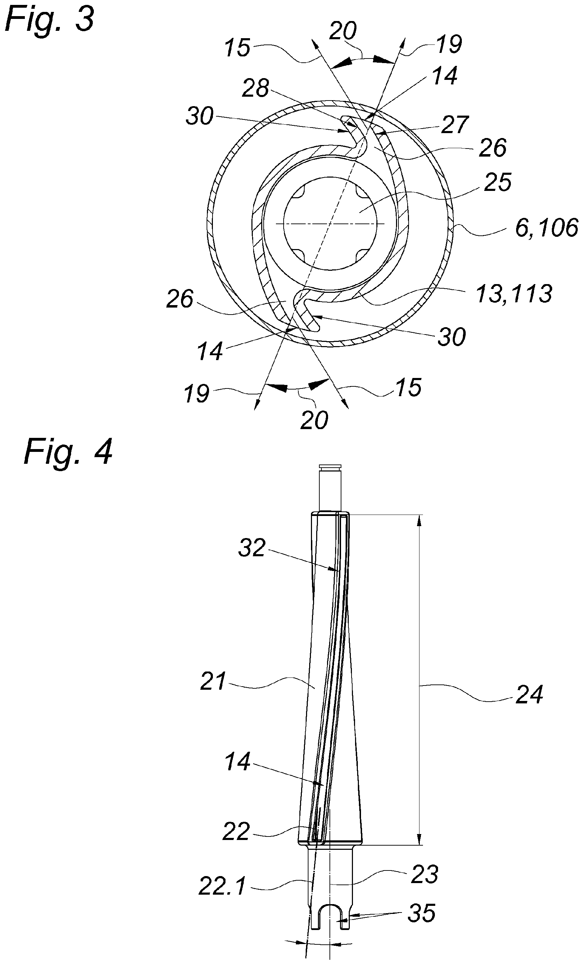

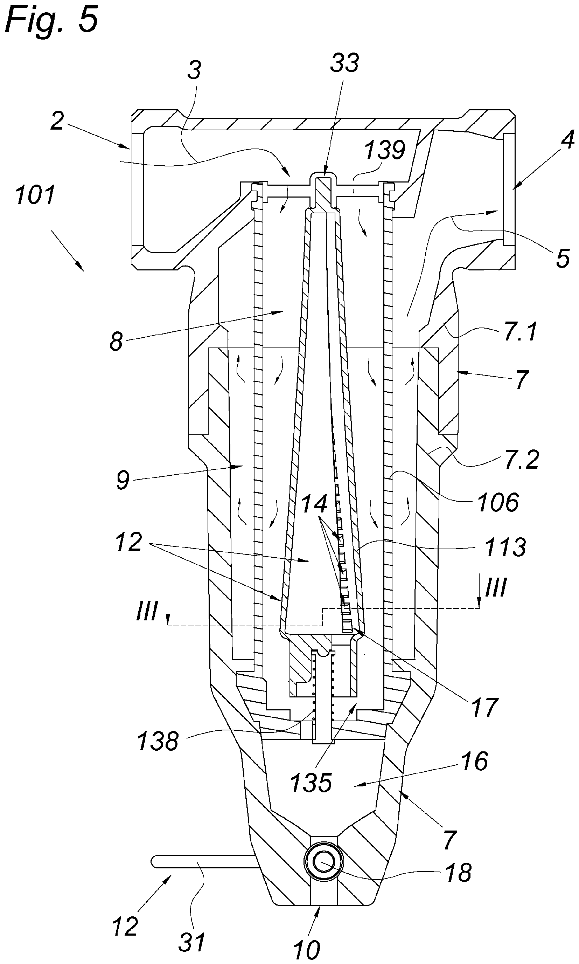

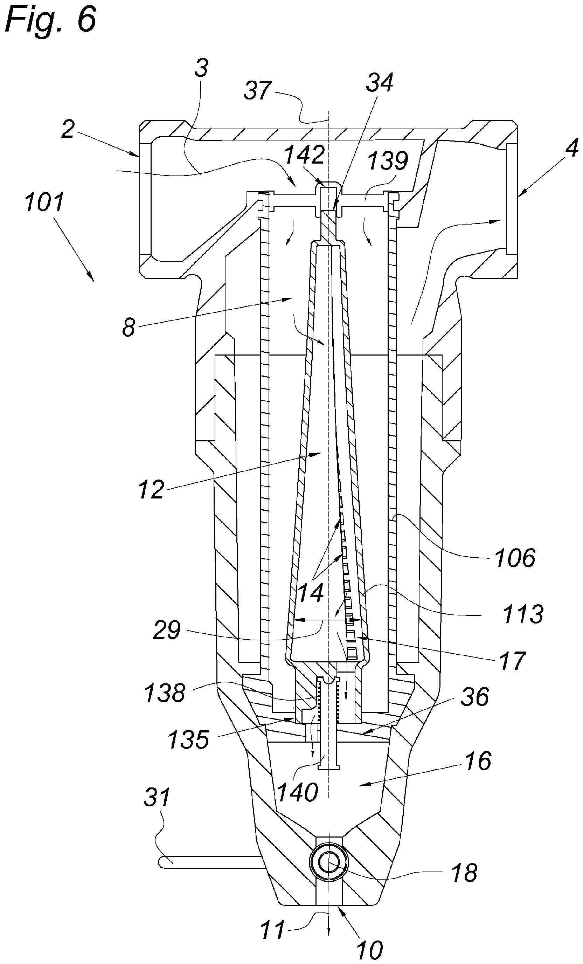

Gemäß den nach den Figuren 1 , 2 5 und 6 dargestellten Rückspülfiltern 1 und 101 ist ein Einlass 2 für die zu filternde Flüssigkeit 3, insbesondere Trinkwasser, und ein Auslass 4 für die gefilterte Flüssigkeit 5 zu erkennen. Zum Zwecke der Filterung der Flüssigkeit 3 ist im Rückspülfilter 1 bzw. 101 ein kartuschenförmiger Filter 6, 106 vorgesehen, der das Gehäuse 7 des Rückspülfilters 1 , 101 in eine mit dem Einlass 2 verbundene Einlasskammer 8 und in eine mit dem Auslass 4 verbundene Auslasskammer 9 unterteilt. Das Gehäuse 7 des Rückspülfilters 1 , 101 wird von einem Oberteil 7.1 und einer vom Oberteil 7.1 lösbaren Filterglocke 7.2 ausgebildet. Gemäß Fig. 2 ist zum Rückspülen des Rückspülfilters 1 , 101 , dieser mit einem Ablauf 10 ausgestattet, über welchen Ablauf 10 die in Fig. 2 bzw. Fig. 6 abzuführende Flüssigkeit 1 1 samt eventuellen Schmutzpartikeln - welche nicht näher dargestellt wurden - abgeführt werden kann. Diese abzuführende Flüssigkeit 1 1 wird von der Rückspüleinrichtung 12 im Bereich der Einlasskammer 8 entnommen, wofür die Rückspüleinrichtung 12 unter anderem ein Absaugelement 13 bzw. 113 in der Einlasskammer 8 aufweist. Dieses Absaugelement 13 bzw. 113 ist um den Filter 6, 106, vorzugsweise frei, drehbar und weist mehrere Ansaugöffnungen 14 auf, welche in Ansaugrichtung 15 auf den Filter 6, 106 zur Filterreinigung gerichtet sind, wie dies in Fig. 3 für das erste Absaugelement 13 des ersten Rückspülfilters 1 in einem Vollschnittschnitt nach III-III senkrecht zu seiner Längsachse dargestellt ist. Diese Fig. 3 gilt auch für das zweite Absaugelement 113 des zweiten Rückspülfilters 101 mit einem abgeknickten Schnittverlauf nach III-III der Fig. 5.

Diese Ansaugöffnungen 14 sind über einen Rückspülkanal 16 der Rückspüleinrichtung 12 mit dem Auslass 10 strömungsverbunden. Der Rückspüleinrichtung 12 ist auch eine Dreheinrichtung 17 zugeordnet, mit welcher das Absaugelement 13, 113 drehend angetrieben werden kann - und zwar indem eine Druckabsenkung im Rückspülkanal 16 genutzt wird, welche Druckabsenkung beim Rückspülen im Rückspülkanal 16 auftritt, wenn über den Betätigungshebel 31 das Rückspülventil 18 geöffnet wird.

Erfindungsgemäß wird die Drehbewegung des Absaugelements 13, 113 von der Dreheinrichtung 17 dadurch erzeugt, dass die Ansaugrichtungen 15 der Ansaugöffnungen 14 gegen die Radiale 19 des Absaugelements 13, 113 geneigt sind - wie dies in Fig. 3 anhand des Neigungswinkels 20 zwischen der Ansaugrichtungen 15 und der Radialen 19 in der Horizontalen bzw. einer Horizontalebene zu erkennen ist. Durch diese ausgerichteten Ansaugrichtungen 15 kann ein auf das Absaugelements 13, 113 wirkendes Reaktionsmoment erzeugt werden, welches das im Rückspülfilter 1 , 101 frei drehbar gelagerte Absaugelement 13, 113 in Drehung versetzt. Die Kraftrichtungen bzw. Ansaugrichtungen 15 der über die Ansaugöffnungen 14 abgeführten Flüssigkeit 1 1 schneiden nämlich nicht die Lagerachse 37, um die sich das Absaugelements 13, 113 dreht, sondern sind beispielsweise um 50 Grad gegen die Radiale 19 versetzt, wodurch auf das Absaugelement 13, 113 ein Drehmoment wirkt. Im Gegensatz zum Stand der Technik ist es daher nicht erforderlich, ein mechanisches Getriebe zum Antrieb des Absaugelements 13, 113 vorzusehen - welches Getriebe einerseits konstruktiv aufwendig ist und zudem durch seine Lage im Rückspülkanal 16 einer erhöhten Verschmutzungsgefahr unterliegt. Gegenüber dem Stand der Technik sind Wartungsfreundlichkeit und Funktionssicherheit demnach erheblich erhöht.

Wie insbesondere der Fig. 4 zu entnehmen, weist sind die Ansaugöffnungen 14 des ersten Absaugelements 13 schlitzförmig bzw. als Schlitz 22 ausgebildet und verlaufen helixförmig am Mantel 21 des ersten Absaugelements 13. Dadurch ergibt sich ein geneigter Verlauf der Schlitzlängsachse 22.1 der Ansaugöffnung 14 zur Längsachse 23 des ersten Absaugelements 13 - was die Absaugung am Filter 6 verbessen kann, insbesondere wenn hartnäckig haftende Schmutzpartikel vom Filter 6 abzusaugen sind. Wie zudem in Fig. 4 dargestellt, ist dieser geneigte Verlauf der Schlitzlängsachse 22.1 über die gesamte Länge 24 der Ansaugöffnung 14. Die beiden schlitzförmigen Ansaugöffnungen 14 bzw. Schlitz 22 sind zudem am ersten Absaugelement 13 diametral gegenüberliegend.

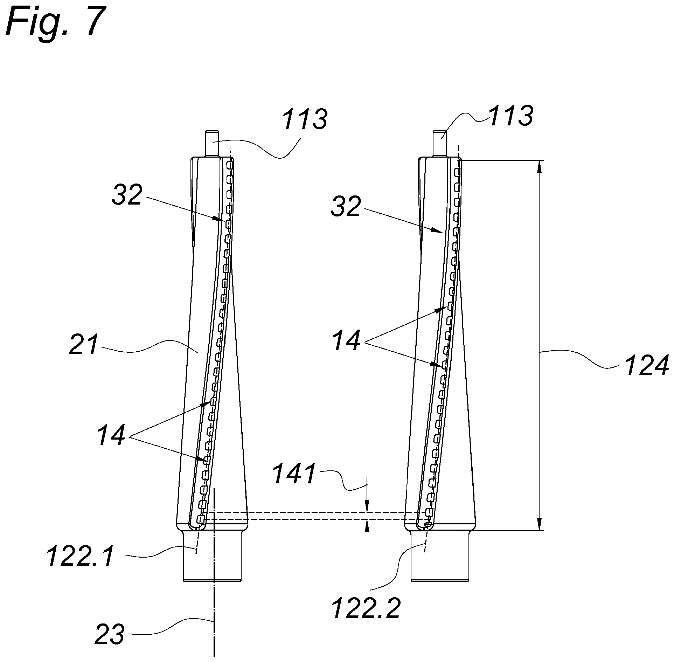

Das nach Fig. 7 im Detail in Vorder- und Rückansicht dargestellte zweite Ansaugelement 113 zeigt zum Unterschied zum nach Fig. 4 dargestellten Ansaugelement 13 mehrere Reihen 122.1 und 122.2 an Ansaugöffnungen 14, die nacheinander und voneinander beabstandet angeordnet sind.

Wie zudem in Fig. 7 dargestellt, verlaufen die Reihen 122.1 und 122.2 über deren gesamten Länge 124 geneigt zur Längsachse 23 des zweiten Absaugelements 13.

Die Ansaugöffnungen 14 der beiden diametral gegenüberliegenden Reihe 122.1 , 122.2 sind zudem auf Lücke 141 zueinander angeordnet, was ein besonders gutes Losreißen der Schmutzpartikel vom Filter 106 ermöglicht.

Für eine konstruktiv einfache Lösung, wird das Absaugelement 13, 113 koaxial im Filter 6, 106 angeordnet, wie dies beispielsweise in der Figur 2 bzw. 4 erkannt wer- den kann - Diese koaxiale Anordnung kann zudem eine besonders gleichmäßige Reinigung des Filters 6, 106 gewährleisten kann.

Der Rückspülkanal 16 weist im Absaugelement 13, 113 einen mittleren Zentralkanal 25 und mehrere mit dem mittleren Zentralkanal 25 verbundene Seitenkanäle 26 auf, was in der Fig. 3 näher dargestellt ist. Die Seitenkanäle 26 verlaufen gegen die Radiale 20 des Absaugelements 13, 113 geneigt und enden in der jeweiligen Ansaugöffnung 14. Indem sich diese Seitenkanäle 26 einander gegenüberliegen und gekrümmte Leitflächen 27, 28 aufweisen, welche an der Ansaugöffnung 14 enden, kann ein düsenförmig gerichteter Saugstrahl in Ansaugrichtungen 15 erzeugt werden, was die Triebkraft zur Drehung des Absaugelements 13, 113 zusätzlich steigert.

Der Zentralkanal 25 erweitert sich längs in seiner Querschnittsfläche 29 - und zwar wird dieser in Richtung des Abflusses 10 in seiner Querschnittsfläche 29 größer. Damit wird eine gleichmäßige Absaugung über die gesamte Ansaugöffnung 14 erreicht.

Das Absaugelement 13, 113 weist zudem zwei vorwärts gekrümmte Schaufeln 30 auf um das Absaugelement 14 als Schaufelrad auszubilden, wie dies in der Figur 3 erkannt werden kann. Damit kann das Absaugelement 13, 113 in der Art einer Gleichdruckturbine auch kinetische Energie im Strömungspfad zwischen Einlass 2 und Auslass 4 entnehmen und diese zum Treiben der Drehbewegung des Absaugelements 13 verwenden. Damit kann selbst in Falle einer geringen Entnahme von gefilterter Flüssigkeit 5 (was strichliert in Fig. 2 dargestellt worden ist) am Auslass 4 bzw. damit einer vergleichsweise geringen Druckdifferenz die Drehung des Absaugelements 13, 113 und damit eine funktionstüchtige Absaugung des Filters 6, 106 erhalten bleiben.

Wie in der Fig. 4 zu erkennen, weisen die beiden Schaufeln 30 deren jeweilige Ansaugöffnung 14 an ihrer Schaufelkante 32 auf, was an diesen Stellen bremsende Verwirbelungen vermeiden und damit die Drehung des Absaugelements 13, 113 erleichtert. Zudem variiert die Schaufelkontur der Schaufel 30 in Längsrichtung des Absaugelements 13, 113.

Zudem ist in einem Vergleich zwischen Fig. 1 und Fig. 2 bzw. zwischen Fig. 5 und Fig. 6 zu erkennen, dass das Absaugelement 13, 113 im Rückspülfilter 1 axial von einer Filterbetriebslage 33 in eine Rückspüllage 34 verschiebbar gelagert ist, und zwar axial entlang der Lagerachse 37, um die auch das Absaugelement 13 drehbar gelagert ist. Da das Absaugelement 13, 113 im Rückspülfilter 1 entgegen einer Federkraft einer Rückstellfeder 38, 138 axial verschiebbar gelagert ist, kann auch nach dem Rückspülen des Rückspülfilters 1 das Absaugelement 13 auf konstruktiv einfache Weise standfest von der Rückspüllage 34 in die Filterbetriebslage 33 zurückbewegt werden.

Nach Fig. 1 und 2 bildet sich der Sitz der drückenden Rückstellfeder 38 sich zwischen dem offenen Filterdeckel 39 des Filters 6 und einer im ersten Absaugelement 13 eingesetzten Ringscheibe 40 aus.

Nach Fig. 5 und 6 bildet sich der Sitz der drückenden Rückstellfeder 138 zwischen dem Boden 36 der Einlasskammer 8 und einem Führungsstange 140 aus, die im Boden 36 linear verschiebbar gelagert ist. Der offene Filterdeckel 139 bildet hier eine Buchse 142 als Gegenlager des bolzenförmigen Endes des Absaugelements 113 aus.

Durch diese axiale Verschiebbarkeit kann außerdem auch eine Auslassöffnung 35, 135 geöffnet oder verschlossen werden, was einer schnellen und standfesten Reinigung des Filters 6, 106 förderlich ist.

Nach dem ersten Ausführungsbeispiel sind nämlich erste Auslassöffnungen 35 mit dem Rückspülkanal 12 verbunden und relativ zum Boden 36 der Einlasskammer 8 derart angeordnet, dass einerseits in der Filterbetriebslage 33 diese ersten Auslassöffnungen 35 oberhalb des Bodens 36 der Einlasskammer 8 liegen und damit gegenüber der Einlasskammer 8 offen sind und andererseits in der axial zur Filterbetriebslage 33 verschobenen Rückspüllage 12 diese Auslassöffnungen 35 unterhalb des Bodens 36 der Einlasskammer 8 liegen und damit gegenüber der Einlasskammer 8 verschlossen ist. Damit können zu Beginn der Rückspülung bereits Verunreinigungen in einen unterhalb der Einlasskammer 8 liegenden Druckraum 27 abgeführt werden - womit die Ansaugöffnungen 14 vor Verstopfung durch größere Verunreinigungen geschützt werden.

Gemäß dem zweiten Ausführungsbeispiel bildet sich die zweite Auslassöffnung 135 zwischen dem zweiten Absaugelement 113 und dem Boden 36 der Einlasskammer 8 aus - hierfür weist das zweite Absaugelement 113 in seiner Filterbetriebslage 33 einen Abstand zum Boden 36 auf. In der axial zur Filterbetriebslage 33 verschobenen Rückspüllage 34 liegt das zweite Absaugelement 113 am Boden 36 an, was die zweite Auslassöffnung 135 verschließt.

## Patentansprüche

1. . Rückspülfilter mit einem Einlass (2), Auslass (4) und Ablauf (10), mit einem Filter (6, 106), mit einem Gehäuse (7), das vom Filter (6, 106) in eine mit dem Einlass (2) verbundene Einlasskammer (8) und in eine mit dem Auslass (4) verbundene Auslasskammer (9) unterteilt ist, und mit einer Rückspüleinrichtung (12), die sowohl ein im Gehäuse (7) um den Filter (6, 106) einlassseitig drehbar angeordnetes Absaugelement (13, 113) mit mindestens einer Ansaugöffnung (14), welche in Ansaugrichtung (15) auf den Filter (6, 106) zur Filterreinigung gerichtet ist, als auch einen mit der Ansaugöffnung (14) und einem Ablauf (10) verbundenen Rückspülkanal (16) und eine Dreheinrichtung (17) aufweist, die bei einer Druckabsenkung im Rückspülkanal (16) die Drehbewegung des Absaugelements (13, 113) um den Filter (6, 106) treibt, wobei die Dreheinrichtung (17) bei der Druckabsenkung im Rückspülkanal (16) die Drehbewegung des Absaugelements (13, 113) durch die, gegen die Radiale (19) des Absaugelements (13, 113) geneigte Ansaugrichtung (15) der Ansaugöffnung (14) treibt,
**dadurch gekennzeichnet, dass** das Absaugelement (13, 113) im Rückspülfilter axial entlang einer Lagerachse (37), um die das Absaugelement (13, 113) drehbar gelagert ist, von einer Filterbetriebslage (33) in eine Rückspüllage (34) verschiebbar gelagert ist, und wobei der Rückspülfilter (1 , 101 ) eine mit dem Rückspülkanal (16) verbundene Auslassöffnung (35, 135) aufweist, die einerseits in der Filterbetriebslage (33) des Absaugelements (13, 1 13) gegenüber der Einlasskammer (8) offen und andererseits in der axial zur Filterbetriebslage (33) verschobenen Rückspüllage (34) des Absaugelements (13, 1 13) gegenüber der Einlasskammer (8) verschlossen ist.

2. . Rückspülfilter nach Anspruch 1 , **dadurch gekennzeichnet, dass** die Ansaugöffnung (14) schlitzförmig ausgebildet ist.

3. . Rückspülfilter nach Anspruch 2, **dadurch gekennzeichnet, dass** die Schlitzlängsachse (22.1 ) der Ansaugöffnung (14) zur Längsachse (23) des Absaugelements (13) geneigt verläuft.

4. . Rückspülfilter nach Anspruch 1 , **dadurch gekennzeichnet, dass** das Absaugelement (113) mindestens eine längs diesem verlaufende Reihe (122.1 , 122.2) an nacheinander und voneinander beabstandet angeordneten Ansaugöffnungen (14) aufweist.

5. . Rückspülfilter nach Anspruch 4, **dadurch gekennzeichnet, dass** das Absaugelement (113) zwei diametral gegenüberliegende Reihen (122.1 , 122.2) aufweist, deren Ansaugöffnungen (14) auf Lücke (141) zueinander angeordnet sind.

6. . Rückspülfilter nach einem der Ansprüche 1 bis 5, **dadurch gekennzeichnet, dass** das Absaugelement (13, 113) und der Filter (6, 106) koaxial zueinander angeordnet sind.

7. . Rückspülfilter nach einem der Ansprüche 1 bis 6, **dadurch gekennzeichnet, dass** der Rückspülkanal (16) einen mittleren Zentralkanal (25) im Absaugelement (13, 113) und mindestens einen mit dem mittleren Zentralkanal (25) verbundenen Seitenkanal (26) aufweist, welcher gegen die Radiale (19) des Absaugelements (13, 113) geneigt verläuft und in der Ansaugöffnung (14) endet.

8. . Rückspülfilter nach Anspruch 7, **dadurch gekennzeichnet, dass** der Seitenkanal (26) einander gegenüberliegende, gekrümmte Leitflächen (27, 28) aufweist, die an der Ansaugöffnung (14) enden.

9. . Rückspülfilter nach Anspruch 7 oder 8, **dadurch gekennzeichnet, dass** sich der Zentralkanal (25) in Richtung Ablauf (10) in seinem Querschnittsfläche (29) erweitert.

10. . Rückspülfilter nach einem der Ansprüche 1 bis 9, **dadurch gekennzeichnet, dass** das Absaugelement (13, 113) mindestens eine Schaufel (30) aufweist.

11. . Rückspülfilter nach Anspruch 10, **dadurch gekennzeichnet, dass** die Schaufel (30) die Ansaugöffnung (14) an ihrer Schaufelkante (32) aufweist.

12. . Rückspülfilter nach Anspruch 10 oder 11 , **dadurch gekennzeichnet, dass** die Schaufel (30) vorwärts gekrümmt ist.

13. . Rückspülfilter nach Anspruch 10, 11 oder 12, **dadurch gekennzeichnet, dass** die Schaufelkontur der Schaufel (30) in Längsrichtung des Absaugelements (13, 113) variiert.

14. . Rückspülfilter nach einem der Ansprüche 1 bis 13, **dadurch gekennzeichnet, dass** das Absaugelement (13, 113) im Rückspülfilter (1 ) frei drehbar angeordnet ist.

15. . Rückspülfilter nach einem der vorstehenden Ansprüche, **dadurch gekennzeichnet, dass** das Absaugelement (13, 113) im Rückspülfilter (1) entgegen einer Rückstellfeder (38, 138) axial verschiebbar gelagert ist.

## Claims

1. A backflushing filter comprising an inlet (2), outlet (4), and drain (10), comprising a filter (6, 106), comprising a housing (7), which is divided by the filter (6, 106) into an inlet chamber (8) connected to the inlet (2) and into an outlet chamber (9) connected to the outlet (4), and comprising a backflushing device (12), which has an suction element (13, 113), which is arranged in the housing (7) so as to be able to rotate about the filter (6, 106) on the inlet side, comprising at least one suction opening (14), which is oriented towards the filter (6, 106) in the suction direction (15) for filter cleaning purposes, as well as a backflushing duct (16) connected to the suction opening (14) and a drain (10), and a rotating device (17), which drives the rotational movement of the suction element (13, 113) about the filter (6, 106) in the case of a drop in pressure in the backflushing duct (16), wherein the rotating device (17) drives the rotational movement of the suction element (13, 113) in the case of the drop in pressure in the backflushing duct (16) through the suction direction (15) of the suction opening (14), which is inclined against the radial direction (19) of the suction element (13, 113),
**characterized in that** the suction element (13, 113) is mounted in the backflushing filter axially along a bearing axis (37) so as to be rotatable about the suction element (13, 113), is mounted so as to be displaceable from a filter operating position (33) into a backflushing position (34), and wherein the backflushing filter (1, 101) has an outlet opening (35, 135), which is connected to the backflushing duct (16) and which on the one hand, in the filter operating position (33) of the suction element (13, 113), is open with respect to the inlet chamber (8), and which on the other hand, in the backflushing position (34), which is displaced axially to the filter operating position (33), of the suction element (13, 113), is closed with respect to the inlet chamber (8).

2. The backflushing filter according to claim 1, **characterized in that** the suction opening (14) is formed in a slit-shaped manner.

3. The backflushing filter according to claim 2, **characterized in that** the slit longitudinal axis (22.1) of the suction opening (14) runs inclined to the longitudinal axis (23) of the suction element (13) .

4. The backflushing filter according to claim 1, **characterized in that** the suction element (113) has at least one row (122.1, 122.2), which runs along said suction element, of suction openings (14), which are arranged one behind the other and spaced apart from one another.

5. The backflushing filter according to claim 4, **characterized in that** the suction element (113) has two rows (122.1, 122.2), which are located diametrically opposite one another and the suction openings (14) of which are arranged with a gap (141) to one another.

6. The backflushing filter according to any one of claims 1 to 5, **characterized in that** the suction element (13, 113) and the filter (6, 106) are arranged coaxially to one another.

7. The backflushing filter according to any one of claims 1 to 6, **characterized in that** the backflushing duct (16) has a middle central duct (25) in the suction element (13, 113) and at least one side duct (26), which is connected to the middle central duct (25) and which runs inclined against the radial direction (19) of the suction element (13, 113) and which ends in the suction opening (14).

8. The backflushing filter according to claim 7, **characterized in that** the side duct (26) has curved guide surfaces (27, 28), which are located opposite one another and which end on the suction opening (14) .

9. The backflushing filter according to claim 7 or 8, **characterized in that** the central duct (25) widens in its cross sectional surface (29) in the direction of the drain (10).

10. The backflushing filter according to any one of claims 1 to 9, **characterized in that** the suction element (13, 113) has at least one scoop (30).

11. The backflushing filter according to claim 10, **characterized in that** the scoop (30) has the suction opening (14) on its scoop edge (32) .

12. The backflushing filter according to claim 10 or 11, **characterized in that** the scoop (30) is curved forwards.

13. The backflushing filter according to claim 10, 11, or 12, **characterized in that** the scoop contour of the scoop (30) varies in the longitudinal direction of the suction element (13, 113).

14. The backflushing filter according to any one of claims 1 to 13, **characterized in that** the suction element (13, 113) is arranged in a freely rotatable manner in the backflushing filter (1).

15. The backflushing filter according to any one of the preceding claims, **characterized in that** the suction element (13, 113) is mounted in the backflushing filter (1) so as to be axially displaceable against a return spring (38, 138).

## Revendications

1. Filtre à rétrolavage comprenant une entrée (2), une sortie (4) et un écoulement (10), un filtre (6, 106), un boîtier (7) qui est divisé par le filtre (6, 106) en une chambre d'entrée (8) reliée à l'entrée (2) et en une chambre de sortie (9) reliée à la sortie (4), et un dispositif de rétrolavage (12) qui comprend à la fois un élément d'aspiration (13, 113) disposé dans le boîtier (7) de manière à pouvoir tourner autour du filtre (6, 106) côté entrée, doté au moins d'un orifice d'aspiration (14) qui est tourné vers le filtre (6, 106) pour le nettoyage du filtre dans la direction d'aspiration (15), et un conduit de rétrolavage (16) relié à l'orifice d'aspiration (14) et à un écoulement (10), et un dispositif de rotation (17) qui, lors d'une chute de pression dans le conduit de rétrolavage (16), entraîne le mouvement de rotation de l'élément d'aspiration (13, 113) autour du filtre (6, 106), le dispositif de rotation (17) entraînant, lors de la chute de pression dans le conduit de rétrolavage (16), le mouvement de rotation de l'élément d'aspiration (13, 113) par la direction d'aspiration (15) de l'orifice d'aspiration (14), inclinée par rapport à la direction radiale (19) de l'élément d'aspiration (13, 113),
**caractérisé en ce que** l'élément d'aspiration (13, 113) est monté dans le filtre à rétrolavage de manière à pouvoir être déplacé d'une position de fonctionnement du filtre (33) dans une position de rétrolavage (34) axialement le long d'un axe de palier (37) autour duquel l'élément d'aspiration (13, 113) est monté sur pivot, et le filtre à rétrolavage (1, 101) comportant une ouverture de sortie (35, 135) reliée au conduit de rétrolavage (16) qui, d'une part, est ouverte par rapport à la chambre d'entrée (8) dans la position de fonctionnement du filtre (33) de l'élément d'aspiration (13, 113) et, d'autre part, est fermée par rapport à la chambre d'entrée (8) dans la position de rétrolavage (34) de l'élément d'aspiration (13, 113), déplacée axialement par rapport à la position de fonctionnement du filtre (33).

2. Filtre à rétrolavage selon la revendication 1, **caractérisé en ce que** l'orifice d'aspiration (14) est conçu en forme de fente.

3. Filtre à rétrolavage selon la revendication 2, **caractérisé en ce que** l'axe longitudinal de la fente (22.1) de l'orifice d'aspiration (14) est incliné par rapport à l'axe longitudinal (23) de l'élément d'aspiration (13).

4. Filtre à rétrolavage selon la revendication 1, **caractérisé en ce que** l'élément d'aspiration (113) comporte au moins une rangée (122.1, 122.2) d'orifices d'aspiration (14) disposés les uns après les autres et espacés les uns des autres, passant le long de celui-ci.

5. Filtre à rétrolavage selon la revendication 4, **caractérisé en ce que** l'élément d'aspiration (113) comporte deux rangées (122.1, 122.2) diamétralement opposées, dont les orifices d'aspiration (14) sont disposés sur des espaces (141) les uns par rapport aux autres.

6. Filtre à rétrolavage selon l'une des revendications 1 à 5, **caractérisé en ce que** l'élément d'aspiration (13, 113) et le filtre (6, 106) sont disposés coaxialement l'un par rapport à l'autre.

7. Filtre à rétrolavage selon l'une des revendications 1 à 6, **caractérisé en ce que** le conduit de rétrolavage (16) comporte un canal central médian (25) dans l'élément d'aspiration (13, 113) et au moins un canal latéral (26) relié au canal central médian (25), qui est incliné par rapport à la direction radiale (19) de l'élément d'aspiration (13, 113) et se termine dans l'orifice d'aspiration (14).

8. Filtre à rétrolavage selon la revendication 7, **caractérisé en ce que** le canal latéral (26) comporte des surfaces de guidage incurvées (27, 28), opposées les uns par rapport aux autres et se terminant au niveau de l'orifice d'aspiration (14).

9. Filtre à rétrolavage selon la revendication 7 ou 8, **caractérisé en ce que** le canal central (25) s'étend dans sa section transversale (29) en direction de l'écoulement (10) .

10. Filtre à rétrolavage selon l'une des revendications 1 à 9, **caractérisé en ce que** l'élément d'aspiration (13, 113) comporte au moins une pale (30).

11. Filtre à rétrolavage selon la revendication 10, **caractérisé en ce que** la pale (30) comporte l'orifice d'aspiration (14) au niveau de son bord (32).

12. Filtre à rétrolavage selon la revendication 10 ou 11, **caractérisé en ce que** la pale (30) est incurvée vers l'avant.

13. Filtre à rétrolavage selon la revendication 10, 11 ou 12, **caractérisé en ce que** le contour de la pale (30) varie dans le sens de la longueur de l'élément d'aspiration (13, 113) .

14. Filtre à rétrolavage selon l'une des revendications 1 à 13, **caractérisé en ce que** l'élément d'aspiration (13, 113) est disposé de manière à pouvoir tourner librement dans le filtre à rétrolavage (1).

15. Filtre à rétrolavage selon l'une des revendications précédentes, **caractérisé en ce que** l'élément d'aspiration (13, 113) est monté de manière à pouvoir être déplacé axialement contre un ressort de rappel (38, 138) dans le filtre à rétrolavage (1).
